(19) Europäisches Patentamt
European Patent Office
Office européen des brevets

(11) **EP 3 552 458 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **17804185.1**

(22) Anmeldetag: **27.11.2017**

(51) Internationale Patentklassifikation (IPC):
***H05B 45/14*** *(2020.01)*

(52) Gemeinsame Patentklassifikation (CPC):
**H05B 45/382; H05B 45/14; H05B 45/39**

(86) Internationale Anmeldenummer:
**PCT/EP2017/080445**

(87) Internationale Veröffentlichungsnummer:
**WO 2018/104087 (14.06.2018 Gazette 2018/24)**

(54) **SCHALTUNGSANORDNUNG UND VERFAHREN ZUM BETREIBEN EINES LEUCHTMITTELS**

CIRCUIT ASSEMBLY AND METHOD FOR OPERATING A LIGHTING MEANS

AGENCEMENT DE CIRCUITS ET PROCÉDÉ DE FONCTIONNEMENT D'UN MOYEN D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2016   DE 102016224328**

(43) Veröffentlichungstag der Anmeldung:
**16.10.2019   Patentblatt 2019/42**

(73) Patentinhaber: **Tridonic GmbH & Co KG**
**6851 Dornbirn (AT)**

(72) Erfinder:
• **DUENSER, Mathias**
**6700 Bludenz (AT)**

• **MAYRHOFER, Markus**
**6850 Dornbirn (AT)**
• **ORTEGA, Joan**
**6850 Dornbirn (AT)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
**WO-A2-2015/103659      US-A1- 2010 085 782**
**US-A1- 2011 133 722**

## Beschreibung

Die vorliegende Erfindung betrifft eine Schaltungsanordnung zum Betreiben eines Leuchtmittels, insbesondere zum Betreiben wenigstens einer LED, sowie ein entsprechendes Verfahren zum Betreiben eines Leuchtmittels.

Aus dem Stand der Technik sind sog. Treiberschaltungen zum Betreiben von LEDs grundsätzlich bekannt. Eine derartige Treiberschaltung wird von einer elektrischen Versorgungsquelle versorgt und umfasst einen Resonanzkreis, der dafür zuständig ist, Strom über eine galvanische Sperre bzw. galvanische Barriere von einer Primärseite auf eine Sekundärseite der galvanischen Sperre zu übertragen. Die galvanische Sperre wird hierbei üblicherweise durch einen Transformator realisiert, wobei Zweck dieser Übertragung von elektrischer Energie die Versorgung einer auf der Sekundärseite geschalteten LED-Strecke mit Strom ist.

Die Funktionsweise derartiger Resonanz-Konverter basiert auf einer geeigneten Anregung des aus mindestens zwei Elementen bestehenden Resonanzkreises. Durch die Steuerung der Frequenz kann die Impedanz des Resonanzkreises angepasst und damit der Leistungsfluss von der Primärseite auf die Sekundärseite reguliert werden. Eine dem Resonanzkreis vorgeschaltete Voll- oder Halbbrückenschaltung dient dabei der Erzeugung einer Rechteckspannung der gewünschten Frequenz. Durch die Möglichkeit des spannungs- oder stromlosen Schaltens versprechen dabei resonante Konverter vor allem eine Steigerung der Effizienz, aber auch die Möglichkeit der Miniaturisierung der passiven Komponenten, da geringere Schaltverluste den Übergang zu höheren Schaltfrequenzen erlauben.

Grundsätzlich stehen verschiedene Topologien zur Realisierung des Resonanzkreises in einer derartigen Schaltungsanordnung zur Verfügung, in letzter Zeit haben sich allerdings insbesondere Schaltungsanordnungen mit Resonanzkreisen auf Basis einer LLC-Topologie durchgesetzt. Eine entsprechende Schaltungsanordnung ist beispielsweise in der WO 2015/103659 A2 beschrieben.

Derartige Treiberschaltungen werden insbesondere beim Betreiben von Leuchtmitteln als Konstantstrom-Konverter betrieben, d.h., den LEDs wird ein der gewünschten Leistung bzw. Helligkeit entsprechender Strom konstanter Stärke zugeführt. Hierzu kann ein Regelkreis zur Regelung des LED-Stroms vorgesehen sein, wobei oftmals ein Istwert des LED-Stroms auf der Sekundärseite der galvanischen Sperre gemessen wird. Diese Istwert-Messung muss allerdings dann an einen primärseitigen Steuerkreis bzw. an eine primärseitige Steuerschaltung zurückgeführt werden, um die Treiberschaltung entsprechend zu steuern. Nachteilig bei dieser Ausgestaltung ist die Tatsache, dass die Rückführung des Istwerts des LED-Stroms zurück zur primärseitigen Steuerschaltung eine Potentialtrennung und somit beispielsweise einen Optokoppler oder vergleichbare Lösungen erfordert.

In der WO 2015/103659 A2 wird deshalb eine Weiterentwicklung des oben beschriebenen Grundprinzips vorgeschlagen, bei der allein durch das Erfassen primärseitiger Betriebsparameter Informationen über den sekundärseitigen Strom erhalten werden, die eine Regelung der Treiberschaltung ermöglichen. Genaugenommen werden bei der in der WO 2015/103659 A2 beschriebenen Lösung ein den primärseitigen Strom durch den Resonanzkreis wiedergebendes Strom-Ist-Signal und ein die an der Primärwicklung des Transformators anliegende Spannung wiedergebendes Spannungs-Ist-Signal erfasst, wobei ausgehend von dem primärseitig gewonnenen Strom-Ist-Signal und dem Spannungs-Ist-Signal eine indirekte Wiedergabe des sekundärseitigen Stroms ermittelt wird.

In der WO 2015/103659 A2 ist eine Treiberschaltung für Leuchtmittel beschrieben, welche eine getaktete Schaltung, einen von der getakteten Schaltung gespeisten Resonanzkreis, sowie einen auf den Resonanzkreis folgenden Übertrager zum Übertragen von elektrischer Energie von einer Primärwicklung zu einer Sekundärwicklung aufweist. Der Resonanzkreis ist mit der Primärwicklung gekoppelt, und die Leuchtmittel sind ausgehend von der Sekundärwicklung mit Strom versorgt. Zudem weist die Treiberschaltung eine Steuereinheit auf, welche dazu ausgebildet ist, ausgehend von einem primärseitig gewonnenen Strom-Ist-Signal und einem primärseitig gewonnenen Spannungs-Ist-Signal eine indirekte Wiedergabe des sekundärseitigen Stroms zu ermitteln, und basierend hierauf den sekundärseitgien Strom durch die Leuchtmittel mittels Steuerung der getakteten Schaltung zu regeln.

In der US 2010/085782 A1 ist ein Resonanzwandler mit einer Primärseite und einer Sekundärseite beschrieben, wobei durch sekundärseitige Messung des sekundärseitigen Magnetisierungsstroms mittels einer Messinduktivität ein Spannungs-Ist-Signal erzeugt, welches einer primärseitigen Schaltung zugeführt wird, welche basierend hierauf den Resonanzwandler steuert.

Aus der US 2011/0133722 A1 ist eine Schaltungsanordnung mit einem Transformator mit einer Primärseite und einer Sekundärseite bekannt, wobei die Primärseite eine Regelschaltung zur Ansteuerung des Transformators aufweist. Dieser Regelung werden ein primärseitig gewonnenen Strom-Ist-Signal und ein Spannungs-Ist-Signal zugeführt, wobei das Spannungs-Ist-Signal durch eine Messinduktivität erzeugt wird, welche mit der Primärseite und der Sekundärseite verbunden ist. Mittels der beiden Signale werden elektrische Größen auf der Sekundärseite ermittelt, wobei diese letztlich durch die Regelung des Transformators beeinflusst werden.

Die im Stand der Technik beschriebene Vorgehensweise ist zwar insofern von Vorteil, als hierdurch ohne Messung sekundärseitiger Betriebsparameter eine Regelung der Schaltungsanordnung realisiert werden kann. Allerdings liefert die bekannte Vorgehensweise nur dann zufriedenstellende Ergebnisse, wenn eine ausreichend gute Kopplung zwischen Primärseite und Sekundärseite des Transformators vorliegt. Unter dieser Voraussetzung kann der Einfluss der Streuinduktivität des Transformators vernachlässigt werden und der sekundärseitig fließende Strom kann mit ausreichender Genauigkeit bestimmt werden. Da diese Idealvoraussetzungen in Realität allerdings oftmals nicht vorliegen, liegt der vorliegenden Erfindung die Aufgabenstellung zugrunde, eine verbesserte Möglichkeit anzugeben, den auf der Sekundärseite des Transformators fließenden Strom zu bestimmen, um eine effiziente Regelung einer entsprechenden Treiberschaltung zu ermöglichen.

Die Aufgabenstellung wird durch eine Schaltungsanordnung zum Betreiben von Leuchtmitteln, welche die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf der Idee, ein den Magnetisierungsstrom des Transformators repräsentierendes Spannungs-Ist Signal zu bestimmen, indem eine Messinduktivität verwendet wird, welche mit der Primärwicklung des Übertrager magnetisch gut gekoppelt ist. Mithilfe der über diese Messinduktivität abfallenden Spannung kann dann auf den Magnetisierungsstrom und letztendlich auf den sekundärseitig fließenden Strom rückgeschlossen werden.

Erfindungsgemäß wird also eine Schaltungsanordnung zum Betreiben von Leuchtmitteln, insbesondere von einer oder mehreren LEDs wie in Anspruch 1 definiert, vorgeschlagen.

Ferner wird erfindungsgemäß ein Verfahren zum Betreiben von Leuchtmitteln, insbesondere LEDs, wie in Anspruch 9 definiert, vorgeschlagen.

Wie nachfolgend anhand spezieller Ausführungsbeispiele der vorliegenden Erfindung detailliert erläutert wird, kann mithilfe dieses Konzepts in zuverlässiger Weise der auf der Sekundärseite des Übertragers fließende Strom ermittelt werden. Hierdurch kann effizient eine Regelung durchgeführt werden, um die von der Schaltungsanordnung betriebenen Leuchtmitteln mit gewünschter Leistung zu versorgen.

Der zum Ermitteln des sekundärseitig fließenden Stroms erforderliche Magnetisierungsstrom wird hierbei durch ein Integrieren der über die Messinduktivität abfallenden Spannung ermittelt. Dabei ist vorzugsweise vorgesehen, das Integrieren des Spannungs-Ist-Signals sowie das weitere Verarbeiten der Informationen, um letztendlich eine Regelung durchführen zu können, in analoger Weise mithilfe von Standardkomponenten durchzuführen. Hierbei kann insbesondere vorgesehen sein, dass die über die Messinduktivität abfallende Spannung mithilfe eines Spannungsteilers erfasst wird und der entsprechende Spannungswert dann einem als Integrator genutzten Operationsverstärker zugeführt wird. Das mithilfe des Operationsverstärkers erhaltene Signal stellt dann ein Eingangssignal für einen nachfolgend angeordneten Komparator dar, der als weiteres Eingangssignal ein Spannungssignal erhält, welches dem primärseitig durch den Resonanzkreis fließenden Strom entspricht. Der entscheidende Vorteil dieser analogen Ausgestaltung der Regelungskomponenten besteht dabei darin, dass auf kostengünstige Standardbauteile zurückgegriffen werden kann und insbesondere auf den Einsatz hochwertiger Komponenten zur digitalen Berechnung des sekundärseitigen Stroms verzichtet werden kann. Dies ist deshalb von Vorteil, da andernfalls die entsprechenden Komponenten zur digitalen Berechnung eine hohe Bandbreite aufweisen müssten, um auch im Falle hoher Schaltfrequenzen das über die Messinduktivität abfallende Spannungssignal korrekt integrieren zu können. Letztendlich kann also mithilfe der bevorzugten Ausführungsform das erfindungsgemäße Konzept in einfacher und kostengünstiger aber dennoch zuverlässiger Weise realisiert werden.

Die Steuereinheit ist dabei erfindungsgemäß dazu ausgebildet, zur Regelung des Stroms durch die Leuchtmittel wenigstens einen Schalter der getakteten Schaltung abhängig vom ermittelten sekundärseitigen Strom zu takten, wobei die Stellgröße für die Regelung z.B. die Frequenz und/oder das Tastverhältnis ist. Dabei ist vorgesehen, dass die Regelung lediglich bei Dimmleveln durchgeführt wird, die oberhalb eines vorgegebenen Mindestwerts, vorzugsweise oberhalb von 1% der Maximalhelligkeit liegen. Dies deshalb, da bei niedrigeren Leistungen die auftretenden Verluste im Verhältnis zur Leistung, bei der die Leuchtmittel betreiben werden, zu groß werden, was eine zuverlässige Regelung des Leuchtmittel-Betriebs verhindert.

Nachfolgend soll die Erfindung anhand der beiliegenden Zeichnung näher erläutert werden. Es zeigen:

Figur 1      schematisch den grundsätzlichen Aufbau einer erfindungsgemäßen Schaltungsanordnung zur Versorgung von Leuchtmitteln;

Figur 2      eine detaillierte Ausgestaltung eines auf einer LLC-Topologie basierenden Übertragers;

Figur 3      eine schematische Darstellung zur Verdeutlichung der erfindungsgemäßen Vorgehensweise zum Ermitteln des sekundärseitig fließenden Stroms;

Figur 4      eine erste schematische Variante zum Realisieren der verschiedenen Komponenten zum Ermitteln des sekundärseitigen Stroms bei dem Übertrager gemäß Figur 2;

Figur 5      eine zweite Variante zum Realisieren der Regelungskomponenten und

Figur 6      ein denkbares Ausführungsbeispiel der erfindungsgemäßen Schaltungsanordnung, welches auf der Nutzung von Standardkomponenten zum Realisieren der Regelungsschleife basiert.

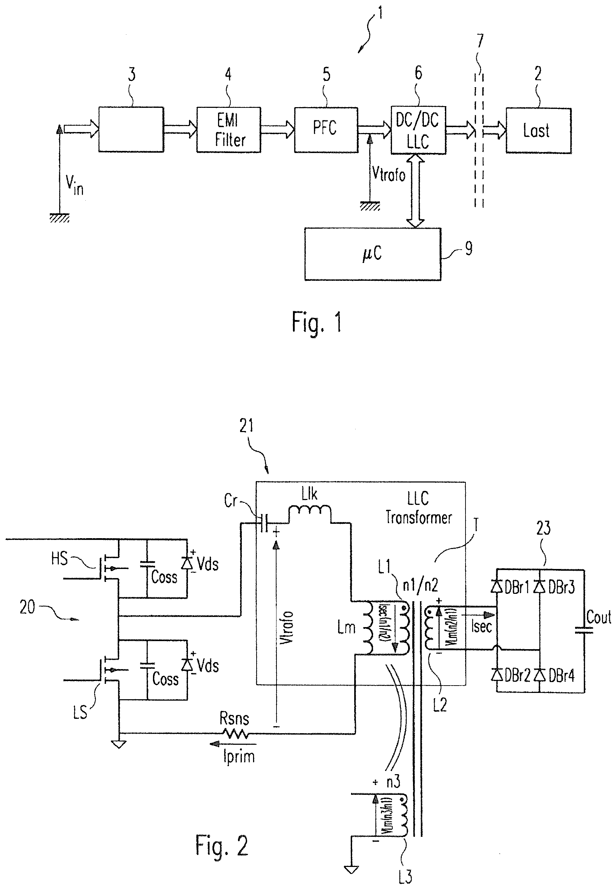

Fig. 1 zeigt in schematischer Form den grundsätzlichen Aufbau einer Schaltungsanordnung bzw. einer Treiberschaltung 1 zum Betreiben einer Last 2. Insbesondere handelt es sich bei dieser Treiberschaltung 1 um eine Schaltung zum Betreiben einer LED-Strecke aufweisend eine oder mehrere LEDs. Die LEDs der LED-Strecke können in Serie, in parallel oder gemäß einer Serien/parallel-Schaltung angeordnet sein. Auch das Betreiben anderer Leuchtmittel wie OLEDs oder dergleichen wäre denkbar.

Die Treiberschaltung 1 wird hierbei vorzugsweise von einer Eingangsspannung $V_{in}$ z.B. in Form einer Wechselspannung bzw. Netzspannung gespeist. Die Eingangsspannung $V_{in}$ wird dabei eingangsseitig vorzugsweise zunächst einem Gleichrichter 3 und einem Filter bzw. EMI-Filter 4 (electromagnetic interference) zum Filtern von elektromagnetischen Störungen zugeführt.

Die auf diese Weise behandelte gleichgerichtete und gegebenenfalls gefilterte Eingangsspannung wird dann weiterhin vorzugsweise einer sog. Leistungsfaktorkorrektur-Schaltung (PFC) 5 zugeführt, die ausgangsseitig eine Versorgungsspannung $V_{trafo}$ zur Verfügung stellt. Diese Versorgungsspannung $V_{trafo}$ ist vorzugsweise eine DC-Spannung bzw. eine näherungsweise konstante Busspannung, welche gegebenenfalls eine gewisse Restwelligkeit aufweisen kann. Beispielsweise kann die Versorgungsspannung $V_{trafo}$ eine 400 Volt DC-Spannung sein.

Alternativ zu der vorbeschriebenen Ausführungsform kann die Versorgungsspannung Vtrafo allerdings auch eine Gleichspannung bzw. eine konstante Spannung wie z.B. eine Batteriespannung sein, wobei in diesem Fall auf den Gleichrichter 3, den Filter 4 und/oder die Leistungsfaktorkorrektur-Schaltung 5 verzichtet werden kann. Insbesondere wäre denkbar, die Versorgungsspannung $V_{trafo}$ im Falle eines Notzustands durch eine Batterie als Gleichspannung zur Verfügung zu stellen, während eines Normalbetriebs allerdings die gesamte Treiberschaltung 1 wie oben beschrieben mit einer Versorgungswechselspannung $V_{in}$ zu versorgen.

Die Versorgungsspannung $V_{trafo}$ stellt dann die eigentliche Eingangsspannung für den Wandler 6 dar, der in Form eines DC/DC-Konverters ausgeführt ist. Der getaktete Wandler 6 umfasst dabei insbesondere einen nachfolgend näher gezeigten Resonanzkreis mit LLC-Topologie, der dafür zuständig ist, Strom über eine galvanische Sperre bzw. galvanische Barriere 7 von einer Primärseite auf eine Sekundärseite der galvanischen Sperre zu übertragen. Der Resonanzkreis ist hierbei auf der Primärseite angeordnet und die Last 2 auf der Sekundärseite. Die Treiberschaltung 1 dient also insgesamt zur Versorgung der auf der Sekundärseite geschalteten Last 2, also beispielsweise der LED-Strecke mit Strom.

Der Wandler 6 ist also ausgangsseitig mit der galvanischen Sperre 7 verbunden, die durch einen Übertrager in Form eines Transformators ausgestaltet ist. Der Transformator kann hierbei an den Wandler 6 angeschlossen sein oder er kann ein Teil des Wandlers 6 sein. Über diese galvanische Sperre 7 bzw. über den Übertrager wird dann Strom von der Primärseite der galvanischen Sperre auf die Sekundärseite der galvanischen Sperre übertragen. Die Übertragung von Strom bzw. von elektrischer Energie von der Primärseite zur Sekundärseite der galvanischen Sperre 7 wird hierbei durch eine Steuereinheit 9 gesteuert bzw. geregelt. Diese Steuereinheit 9 ist auf der Primärseite der galvanischen Sperre 7 angeordnet. Zur Einstellung eines gewünschten Stroms durch die LEDs werden auf der Primärseite elektrische Größen gemessen und der Steuereinheit 9 zurückgeführt. Auf Basis dieser zurückgeführten Messwerte steuert die Steuereinheit 9 dann den Wandler 6 derart, dass der gewünschte Strom durch die LEDs fließt. Die Steuereinheit sorgt also dafür, dass die Last 2 in Form einer Lichtquelle, insbesondere in Form einer LED-Strecke, mit dem gewünschten Strom versorgt wird.

Fig. 2 zeigt eine detailliertere Ausgestaltung des sich an die Leistungsfaktorkorrektur-Schaltung 5 anschließenden Bereichs der erfindungsgemäßen Schaltungsanordnung.

Wie anhand von Fig. 1 erläutert, versorgt also die Versorgungsspannung Vtrafo den Wandler 6 der Treiberschaltung 1. Eingangsseitig ist im Wandler 6 ein Schaltregler vorgesehen, der insbesondere als eine getaktete Schaltung ausgestaltet ist. In Fig. 2 ist beispielsweise ein Wechselrichter in Form einer sog. Halbbrückenschaltung 20 gezeigt. Die Halbbrückenschaltung 20 ist von der Versorgungsspannung Vtrafo versorgt und weist einen potentialniedrigeren Schalter LS und einen potentialhöheren Schalter HS auf. Die beiden Schalter LS, HS der Halbbrückenschaltung 20 können dabei als Transistoren, z.B. FET oder MOSFET, ausgestaltet sein. Beide Schalter LS, HS werden von jeweiligen Steuersignalen ausgehend von der Steuereinheit 9 gesteuert. Der potentialniedrigere Schalter LS ist mit einer primärseitigen Masse verbunden. Am potentialhöheren Schalter HS der Halbbrückenschaltung 20 liegt die Eingangsspannung Vtrafo an.

An den Mittelpunkt der Halbbrückenschaltung 20, d.h. zwischen beiden Schaltern LS, HS, ist ein Resonanzkreis 21 in Form einer Serienschaltung angeschlossen, aufweisend einen Resonanzkondensator Cr, eine erste Induktivität Llk sowie eine weitere Induktivität L1, welche die Primärwicklung des Transformators T bildet. Der Resonanzkreis 21 bildet in diesem Fall einen sog. LLC-Resonanzkreis. Die Primärwicklung L1 des Transformators T weist dabei eine parallele Induktivität Lm auf, die den sog. Magnetisierungsstrom führt. Bei der dargestellten Ausführungsform der getakteten Schaltung in Form der Halbbrücke kann ggf. auch auf den Resonanzkondensator Cr verzichtet werden.

Der Transformator T umfasst neben der Primärwicklung L1 ferner eine mit dieser Primärwicklung gekoppelte Sekundärwicklung L2. Durch diese transformatorische Kopplung ergibt sich die erforderliche galvanische Sperre zwischen den Wicklungen L1, L2

Durch die Sekundärwicklung L2 des Transformators T fließt im Betrieb ein Wechselstrom. Um diesen zum Betreiben der LEDs nutzen zu können, ist dementsprechend ausgangsseitig ein Gleichrichter 23 mit einem - parallel zur nicht dargestellten Last geschalteten - Speicherkondensator Cout vorgesehen, der dann die über den Transformator T übertragene Leistung in Form einer gleichgerichteten und geglätteten Spannung zur Verfügung stellt. Je nach Ausgestaltung der ausgangsseitigen Last könnte allerdings ggf. auch auf den Gleichrichter verzichtet werden. Als Speicherkondensator Cout kann aufgrund seiner vergleichsweise hohen Kapazität vorzugsweise ein Elektrolytkondensator eingesetzt werden.

Da es besonders wichtig ist, dass einerseits eine sehr gute Kopplung zwischen der Primärwicklung L1 und der Messinduktivität L3 gegeben ist, andererseits oft gezielt eine schlechtere Kopplung zwischen Primär- L1 und Sekundärwicklung L2 nötig ist, können zur Realisierung des Transformators T besondere Ausformungen des Kernes (abweichend von einfachen E-Kernen) und/oder der Wicklungen vorteilhaft sein. Dies kann beispielsweise einschliessen, dass über einen Luftspalt eines Schenkels des Kernes der Streufluss zwischen den Wicklungen L1 und L2 individuell eingestellt wird, während hingegen die Kopplung von L1 zu L3 hiervon nicht beeinträchtigt wird.

Die Regelung der Leistung, die der Last bzw. der LED-Strecke zugeführt wird, erfolgt nunmehr dadurch, dass durch entsprechende Ansteuerung durch die Steuereinheit 9 die Schaltfrequenz oder das Tastverhältnis der beiden Schalter HS, LS der Halbbrücke 20 verändert wird. Eine Veränderung der Frequenz hat Einfluss auf die Impedanz des LLC-Resonanzkreises 21, sodass hierdurch die Leistung, die über den Transformator T von der Primärwicklung L1 auf die Sekundärwicklung L2 übertragen wird, eingestellt werden kann. Die Steuereinheit 9 muss also die Schaltfrequenz bei der Ansteuerung der Halbbrücke 20 derart anpassen, dass letztendlich ein gewünschter Stromfluss $I_{sec}$ auf der Sekundärseite erzielt wird.

Wie eingangs geschildert ergibt sich nunmehr allerdings bei der Realisierung der Regelung das Problem, dass vermieden werden soll, den Ist-Wert des LED-Stroms bzw. des sekundärseitigen Stroms $I_{sec}$ unmittelbar zu erfassen. Grund hierfür ist, dass die Steuereinheit 9 zum Ansteuern der Halbbrücke 20 auf der Primärseite der galvanischen Sperre positioniert ist und dementsprechend auch eine entsprechende Potentialtrennung bei der Rückführung des Ist-Signals erforderlich wäre. Bevorzugt sollte deshalb Information über den Stromfluss $I_{sec}$ auf der Sekundärseite durch Erfassung von Parameter-Werten auf der Primärseite erhalten werden.

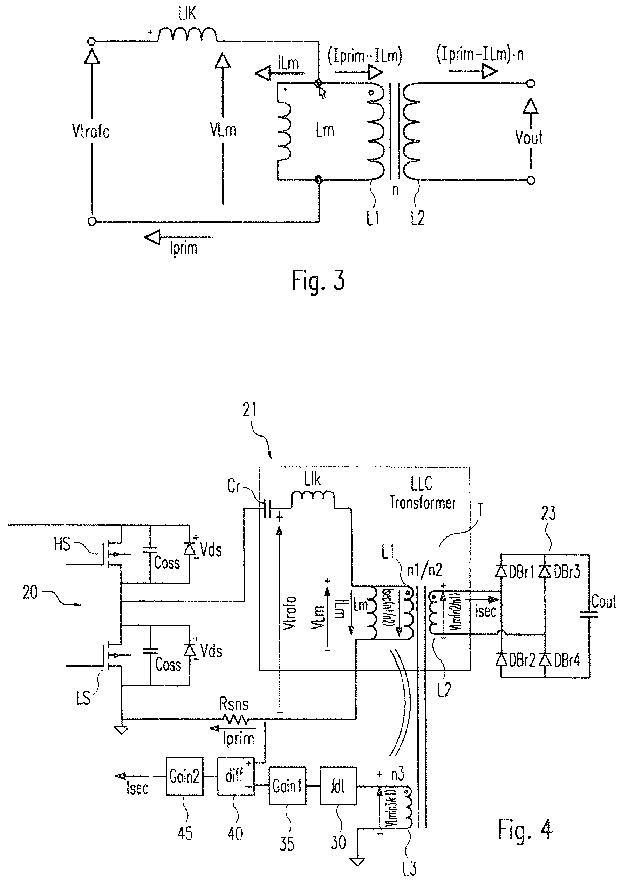

Das Prinzip hierzu ist in Figur 3 dargestellt, wobei davon ausgegangen wird, dass primärseitig zunächst insgesamt ein Strom $I_{prim}$ fließt. Die hiermit verbundene Leistung wird allerdings nicht vollständig durch den Transformator T auf die Sekundärseite übertragen. Stattdessen teilt sich der Strom $I_{prim}$ in zwei Anteile auf, wobei ein Anteil hiervon den sogenannten Magnetisierungsstrom $I_{Lm}$ darstellt und lediglich der andere Anteil über die Primärwicklung L1 auf die Sekundärwicklung L2 übertragen wird. Ist die Höhe des Magnetisierungsstroms $I_{Lm}$ bekannt, so gilt für den auf der Sekundärseite Isec fließenden Strom folgende Beziehung:

$$I_{\mathrm{sec}} = \left(I_{prim} - I_{Lm}\right) \cdot n$$

n = n2/n1 stellt hierbei das Wicklungsverhältnis des Transformators T dar, wobei n1 und n2 die Wicklungszahlen der Primärwicklung L1 bzw. der Sekundärwicklung L2 sind.

Ist also die Höhe des Magnetisierungsstroms $I_{Lm}$ bekannt, so kann bei gleichzeitiger Messung des Gesamtstroms $I_{prim}$ auf der Primärseite der auf der Sekundärseite fließende Strom $I_{sec}$ berechnet werden und es wäre eine Steuerung allein auf Basis von auf der Primärseite erfassten Parametern möglich. Problematisch ist allerdings, dass eine unmittelbare Messung des Magnetisierungsstroms $I_{Lm}$ nicht möglich ist. Allerdings gilt, dass der Magnetisierungsstrom $I_{Lm}$ das zeitliche Integral der über die Primärseite des Transformators T abfallenden Spannung $V_{Lm}$ darstellt. Das heißt, es gilt folgende Beziehung:

$$I_{Lm} = \int \frac{V_{Lm}}{L_m} \cdot dt$$

wobei $L_m$ die Magnetisierungsinduktivität darstellt. Erfindungsgemäß ist nunmehr vorgesehen, dass einerseits der auf der Primärseite fließende Strom $I_{prim}$ erfasst wird, andererseits die an der Primärseite des Transformators T abfallende Spannung $V_{Lm}$ bestimmt und daraus der Magnetisierungsstrom $I_{Lm}$ berechnet wird.

Das Ermitteln des Stroms $I_{prim}$ kann mit Hilfe eines Messwiderstands $R_{sns}$ erfolgen, der in Serie zur Primärwicklung L1 des Transformators T geschaltet ist. Die über diesen Messwiderstand $R_{sns}$ abfallende Spannung ist dann proportional zum Strom $I_{prim}$ und kann als entsprechendes, den Strom-Ist-Wert charakterisierendes Messsignal genutzt werden.

Das Bestimmen der Spannung $V_{Lm}$ erfolgt hingegen erfindungsgemäß mit Hilfe einer zusätzlichen Messinduktivität L3, die in Figur 2 dargestellt ist und magnetisch möglichst gut mit der Primärseite des Transformators T gekoppelt sein sollte. Da für beide Wicklungen, also Primärwicklung L1 und Messinduktivität L3 deren entsprechende Wicklungszahlen n1 bzw. n3 bekannt sind, berechnet sich also der Magnetisierungsstrom dann nach der folgenden Gleichung:

$$I_{Lm} = Gain_1 \cdot \int \left( \frac{n_3 \cdot V_{Lm}}{n_1} \right) \cdot dt$$

mit

$$Gain_1 = \frac{n_1}{n_3 \cdot L_m}$$

Der in der obigen Gleichung enthaltene und zu integrierende Faktor entspricht dabei der über der Messinduktivität L3 abfallenden Spannung $V_{L3}$. Für den auf der Sekundärseite fließenden Strom gilt somit:

$$I_{sec} = \left( I_{prim} - Gain_1 \cdot \int V_{L3} \cdot dt \right) \cdot Gain_2$$

mit

$$Gain_2 = \frac{n_2}{n_1}$$

Letztendlich kann also durch das Erfassen von zwei primärseitigen Parametern der Schaltungsanordnung 1 der auf der Sekundärseite fließende Strom $I_{sec}$ ermittelt werden, was letztendlich in einfacher aber effizienter Weise eine Regelung des Betriebs der Leuchtmittel bzw. allgemein der Last 2 ermöglicht.

Entsprechend dem oben beschriebenen Grundprinzip ist also vorgesehen, einerseits den auf der Primärseite fließenden Strom $I_{prim}$ zu messen sowie andererseits den Magnetisierungsstrom $I_{Lm}$ auf indirekte Weise zu ermitteln, indem mittels der zusätzlichen Messinduktivität L3 eine den Magnetisierungsstrom repräsentierende Spannung erfasst und integriert wird. Auf Basis dieser Informationen könnte dann beispielsweise numerisch die Höhe des Sekundärstroms $I_{sec}$ berechnet und darauf basierend eine Regelung und entsprechende Ansteuerung der Schalter HS, LS der Halbbrücke 20 vorgenommen werden.

In Realität ist allerdings besonders bevorzugt vorgesehen, die oben beschriebenen mathematischen Operationen mithilfe von Standardkomponenten auf analogem Wege zu realisieren, um mit einem möglichst geringen Aufwand eine entsprechende Regelung durchführen zu können. Die Nutzung entsprechender Standardkomponenten ist dabei deshalb zu bevorzugen, da eine tatsächliche numerische Berechnung des sekundärseitigen Stroms auf Basis der primärseitig erfassten Signale eine äußerst hohe Bandbreite der hierzu genutzten digitalen Komponenten erfordern würde, insbesondere um auch im Falle hoher Frequenzen bei der Ansteuerung der Schalter HS, LS eine ausreichend genaue Integration der über die Messinduktivität erfassten Spannung zu ermöglichen.

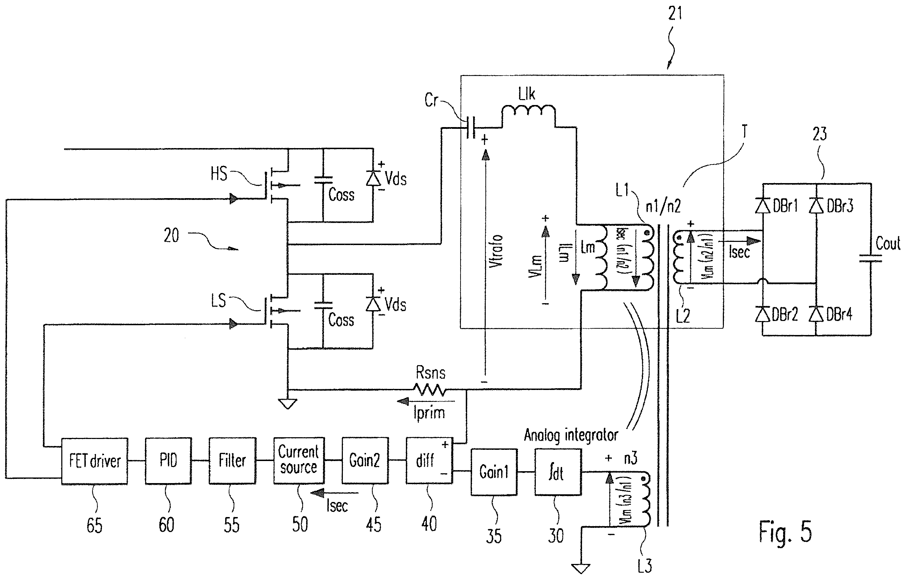

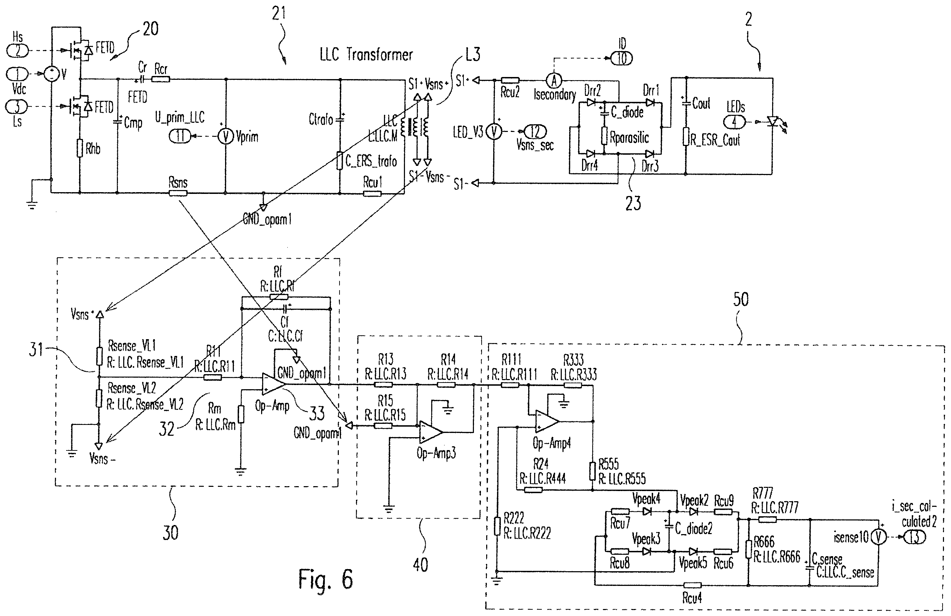

Anhand der nachfolgenden Figuren 4 bis 6 sollen deshalb bevorzugte Ausführungsbeispiele der erfindungsgemäßen Schaltungsanordnung erläutert werden, bei denen zumindest derjenige Bereich der Steuerschaltung, der für die Ermittlung des sekundärseitigen Stroms $I_{sec}$ verantwortlich ist, in analoger Weise ausgeführt wird. Die Figuren 4 und 5 zeigen hierbei schematisch zwei analoge Varianten der Schaltungsanordnung, Figur 6 zeigt ein detailliertes Ausführungsbeispiel.

Hierbei ist vorgesehen, dass die über die Messinduktivität L3 abfallende Spannung mithilfe eines Integrators 30 zunächst integriert wird. Genau genommen ist bei dem Ausführungsbeispiel gemäß Figur 6 vorgesehen, dass das Spannungssignal mit Hilfe eines Spannungsteilers 31 erfasst wird, dessen Ausgang an den Eingang einer analog integrierenden Schaltung 32 angeschlossen ist. Wie hierbei Figur 6 zeigt, besteht die integrierende Schaltung 32 aus einem Operationsverstärker 33 hoher Bandbreite sowie einem Kondensator und drei Widerständen.

Das hierbei gewonnene analoge Spannungssignal, das den Magnetisierungsstrom $I_{Lm}$ charakterisiert, wird anschließend über einen Multiplizierer 35 einem Subtrahierer 40 zugeführt, der als weiteres Eingangssignal das dem primärseitigen Strom $I_{prim}$ entsprechende Signal erhält, welches der über den Messwiderstand $R_{sns}$ abfallenden Spannung entspricht. Das daraus resultierende Signal am Ausgang des Komparators bzw. Subtrahierers 40, welches durch einen weiteren Multiplizierer 45 verarbeitet wurde, gibt dann den sekundärseitig fließenden Strom $I_{sec}$ wieder. Dieser Wert kann dann dem Regelungsabschnitt der Steuerschaltung 9 als Eingangswert zugeführt werden, der darauf basierend eine Ansteuerung der Halbbrückenschalter HS, LS vornimmt. Die Steuerschaltung 9 kann hierbei das in der erfindungsgemäßen Weise gebildete Eingangssignal, welches den sekundärseitigen Strom $I_{sec}$ repräsentiert, mit einem extern zugeführten Sollwert, der beispielsweise einen gewünschten Dimmlevel für die Leuchtmittel darstellt, vergleichen und auf Basis dieses Vergleichs die Schaltfrequenz für die Halbbrücke 20 anpassen.

Eine analoge Ausführungsform hierzu würde entsprechend den Darstellungen in Figur 5 und 6 vorsehen, dass das ausgangsseitige Signal des zweiten Multiplizierers 45 einer entsprechenden Stromquelle 50 zugeführt wird, die ausgangsseitig über einen Filter 55 und einen PI-Regler 60 die Treiber 65 für die beiden Schalter HS, LS der Halbbrückenschaltung 20 ansteuert.

Letztendlich kann also mithilfe der erfindungsgemäßen Vorgehensweise sehr effizient der auf der Sekundärseite fließende Strom ermittelt werden, ohne dass hierfür das Erfassen sekundärseitiger Betriebsparameter erforderlich wäre. Hierdurch wird der Aufwand zum Realisieren einer geeigneten Schaltungsanordnung, welche eine Regelung des der Last zugeführten Stroms ermöglicht, reduziert.

Dabei ist allerdings vorzugsweise vorgesehen, dass das erfindungsgemäße Verfahren lediglich bei Dimmleveln durchgeführt wird, die oberhalb eines Mindestwerts von z.B. 1% der Maximalhelligkeit liegen. Grund hierfür ist, dass bei sehr niedrigen Leistungen Verluste auftreten können, die in der Größenordnung der LED-Leistung liegen. In diesem Fall führen dann die verhältnismäßig hohen Verluste zu derart starken Abweichungen, dass eine sinnvolle und genau Regelung kaum mehr möglich ist. Für derartige niedrige sekundärseitige Stromwerte, welche Dimmstellungen von 1% oder weniger entsprechen, könnte allerdings des Weiteren vorgesehen werden, die erwähnten Verlustleistungen durch einen Abgleichprozess zu erfassen und dann in einer Korrekturschaltung zu kompensieren.

**Patentansprüche**

1. Schaltungsanordnung (1) zum Betreiben von Leuchtmitteln (2), insbesondere einer oder mehrerer LEDs, aufweisend:

   • eine mit Spannung versorgbare und mittels wenigstens eines Schalters (LS, HS) getaktete Schaltung (20), die einen Resonanzkreis (21) mit LLC-Topologie speist,
   • einen auf den Resonanzkreis (21) folgenden Übertrager (T) zum Übertragen von elektrischer Energie von einer Primärwicklung (L1) zu einer Sekundärwicklung (L2), wobei der Resonanzkreis (21) mit der Primärwicklung (L1) gekoppelt ist und die Leuchtmittel (2) ausgehend von der Sekundärwicklung (L2) mit Strom versorgbar sind,
   • eine Steuereinheit (9),
   **dadurch gekennzeichnet, dass**
   der Steuereinheit (9) ein den Strom ($I_{prim}$) durch den Resonanzkreis (21) wiedergebendes Strom-Ist-Signal sowie ein den Magnetisierungsstrom ($I_{Lm}$) des Übertragers (T) repräsentierendes Spannungs-Ist-Signal zugeführt sind, wobei die Steuereinheit (9) dazu ausgebildet ist:

   • auf Basis des Strom-Ist-Signals sowie des Spannungs-Ist-Signals den sekundärseitigen Strom ($I_{sec}$) zu ermitteln und darauf basierend die getaktete Schaltung (21) anzusteuern;
   • zur Regelung des Stroms durch die Leuchtmittel (2) wenigstens einen des wenigstens einen Schalter (LS, HS) der getakteten Schaltung (20) abhängig vom ermittelten sekundärseitigen Strom ($I_{sec}$) zu takten, wobei die Stellgröße für die Regelung z.B. die Frequenz und/oder das Tastverhältnis ist; und
   • die Regelung lediglich bei Dimmleveln durchzuführen, die oberhalb eines vorgegebenen Mindestwerts, vorzugsweise oberhalb von 1% der Maximalhelligkeit liegen;

wobei zum Erfassen des Spannungs-Ist-Signals, welches den Magnetisierungsstrom ($I_{Lm}$) repräsentiert, eine Messinduktivität (L3) vorgesehen ist, welche mit der Primärwicklung (L1) des Übertragers (T) gekoppelt ist.

2. Schaltungsanordnung nach Anspruch 1, **dadurch gekennzeichnet,** **dass** zur Ermittlung des sekundärseitigen Stroms ($I_{sec}$) Mittel zur kontinuierlichen Messung und Verarbeitung der an der Messinduktivität (L3) anliegenden Spannung ausgebildet sind.

3. Schaltungsanordnung nach Anspruch 2, **dadurch gekennzeichnet,** **dass** diese Mittel, welche insbesondere einen Integrierer (30) und ggf. einen Multiplizierer (35) aufweisen, zum Ermitteln des auf der Primärseite des Übertragers (T) fließenden Magnetisierungsstroms ($I_{Lm}$) ausgehend von an der Messinduktivität (L3) anliegenden Spannung ausgebildet sind.

4. Schaltungsanordnung nach Anspruch 3, **dadurch gekennzeichnet,** **dass** die Schaltungsanordnung (1) ferner einen Subtrahierer (40) aufweist zum Ermitteln des sekundärseitigen Stroms ($I_{sec}$) durch Subtrahieren des Magnetisierungsstroms ($I_{Lm}$) von dem durch den Resonanzkreis (21) fließenden Strom (Iprim).

5. Schaltungsanordnung nach Anspruch 4, **dadurch gekennzeichnet,** **dass** die Schaltungsanordnung (1) zum Erfassen des den Strom ($I_{prim}$) durch den Resonanzkreis (21) wiedergebenden Strom-Ist-Signals einen Messwiderstand ($R_{sns}$) aufweist, der in Serie zu der Primärwicklung (L1) des Übertragers (T) angeordnet ist.

6. Schaltungsanordnung nach einem der vorherigen Ansprüche, **dadurch gekennzeichnet,** **dass** die getaktete Schaltung (20) von einer DC-Spannung versorgbar ist.

7. Schaltungsanordnung nach einem der vorherigen Ansprüche, **dadurch gekennzeichnet,** **dass** die getaktete Schaltung (20) ein Wechselrichter ist und z.B. in Form einer Halbbrückenschaltung ausgestaltet ist.

8. Betriebsgerät zum Betreiben von Leuchtmitteln, aufweisend eine Schaltungsanordnung nach einem der vorherigen Ansprüche.

9. Verfahren zum Betreiben von Leuchtmitteln (2), insbesondere LEDs, aufweisend folgende Schritte:

    • eine mittels wenigstens eines Schalters (LS, HS) getaktete Schaltung (20) wird mit Spannung ($V_{trafo}$) versorgt und speist einen Resonanzkreis (21) mit LLC-Topologie,
    • ein auf den Resonanzkreis (21) folgender Übertrager (T) überträgt elektrische Energie von einer Primärwicklung (L1) zu einer Sekundärwicklung (L2), wobei der Resonanzkreis (21) mit der Primärwicklung (L1) des Übertragers (T) gekoppelt ist und die Leuchtmittel (2) ausgehend von der Sekundärwicklung (L2) mit Strom versorgt werden,

    **dadurch gekennzeichnet, dass**

    • einer Steuereinheit (9) ein den Strom ($I_{prim}$) durch den Resonanzkreis (21) wiedergebendes Strom-Ist-Signal sowie ein den Magnetisierungsstrom ($I_{Lm}$) des Übertragers (T) repräsentierendes Spannungs-Ist-Signal zugeführt werden, und
    • die Steuereinheit (9) auf Basis des Strom-Ist-Signals sowie des Spannungs-Ist-Signals den sekundärseitigen Strom ($I_{sec}$) ermittelt und darauf basierend die getaktete Schaltung (20) steuert,
    wobei das Spannungs-Ist-Signal, welches den Magnetisierungsstrom ($I_{Lm}$) repräsentiert, mit Hilfe einer Messinduktivität (L3) erfasst wird, welche mit der Primärwicklung (L1) des Übertragers (T) gekoppelt ist,
    wobei zur Regelung des Stroms durch die Leuchtmittel (2) wenigstens ein des wenigstens einen Schalter (LS, HS) der getakteten Schaltung (20) abhängig vom ermittelten sekundärseitigen Strom ($I_{sec}$) getaktet wird, wobei die Stellgröße für die Regelung z.B. die Frequenz und/oder das Tastverhältnis ist, und
    wobei die Steuereinheit (9) die Regelung lediglich bei Dimmleveln, die oberhalb eines vorgegebenen Mindestwerts, vorzugsweise oberhalb von 1% der Maximalhelligkeit liegen, durchführt.

10. Verfahren nach Anspruch 9,
    **dadurch gekennzeichnet,**
    **dass** die Ermittlung des sekundärseitigen Stroms ($I_{sec}$) durch eine kontinuierliche Messung und Verarbeitung der an der Messinduktivität (L3) anliegenden Spannung erfolgt.

11. Verfahren nach Anspruch 10,
    **dadurch gekennzeichnet,**
    **dass** zum Ermitteln des auf der Primärseite des Übertragers (T) fließenden Magnetisierungsstroms ($I_{Lm}$) die an der Messinduktivität (L3) anliegende Spannung integriert und ggf. multipliziert wird.

12. Verfahren nach Anspruch 11,
    **dadurch gekennzeichnet,**
    **dass** zum Ermitteln des sekundärseitigen Stroms ($I_{sec}$) der Magnetisierungsstrom ($I_{Lm}$) von dem durch den Resonanzkreis (21) fließenden Strom ($I_{prim}$) subtrahiert wird.

**Claims**

1. A circuit assembly (1) for operating lighting means (2), in particular one or more LEDs, comprising:

    • a circuit (20) which can be supplied with voltage and clocked by means of at least one switch (LS, HS), which circuit (20) feeds a resonant circuit (21) having LLC topology,
    • a transformer (T), following the resonant circuit (21), for transmitting electrical energy from a primary winding (L1) to a secondary winding (L2), wherein the resonant circuit (21) is coupled to the primary winding (L1), and the lighting means (2) can be supplied with current emanating from the secondary winding (L2),
    • a control unit (9), **characterized in that** an actual current signal representing the current ($I_{prim}$) through the resonant circuit (21), as well as an actual voltage signal representing the magnetizing current ($I_{Lm}$) of the transformer (T), are supplied to said control unit (9),

wherein the control unit (9) is designed to:

    • determine, on the basis of the actual current signal and the actual voltage signal, the secondary-side current ($I_{sec}$), and to control the clocked circuit (21) based thereon;
    • clock at least one of the at least one switch (LS, HS) of the clocked circuit (20), depending on the determined secondary-side current ($I_{sec}$), in order to regulate the current through the lighting means (2), wherein the manipulated variable for the regulation is, for example, the frequency and/or the duty cycle; and
    • perform the regulation only at dimming levels that are above a predetermined minimum value, preferably above 1% of the maximum brightness;

wherein a measuring inductance (L3) is provided, which is coupled to the primary winding (L1) of the transformer (T), for detecting the actual voltage signal which represents the magnetizing current ($I_{Lm}$).

2. The circuit assembly according to Claim 1,
    **characterized in that**

means for the continuous measurement and processing of the voltage applied to the measuring inductance (L3) are designed to determine the secondary-side current ($I_{sec}$).

3. The circuit assembly according to Claim 2, **characterized in that**
these means, which in particular comprise an integrator (30) and optionally a multiplier (35), are designed to determine the magnetizing current ($I_{Lm}$) flowing on the primary side of the transformer (T) starting from the voltage applied to the measuring inductance (L3).

4. The circuit assembly according to Claim 3, **characterized in that**
the circuit assembly (1) furthermore comprises a subtractor (40) for determining the secondary-side current ($I_{see}$) by subtracting the magnetizing current ($I_{Lm}$) from the current ($I_{prim}$) flowing through the resonant circuit (21).

5. The circuit assembly according to Claim 4, **characterized in that**
the circuit assembly (1) for detecting the actual current signal representing the current ($I_{prim}$) through the resonant circuit (21) comprises a measuring resistor ($R_{sns}$), which is arranged in series with the primary winding (L1) of the transformer (T).

6. The circuit assembly according to one of the preceding claims, **characterized in that**
the clocked circuit (20) can be supplied by a DC voltage.

7. The circuit assembly according to one of the preceding claims, **characterized in that**
the clocked circuit (20) is an inverter and, for example, is designed in the form of a half-bridge circuit.

8. Operating device for operating lighting means, comprising a circuit assembly according to one of the preceding claims.

9. Method for operating lighting means (2), in particular LEDs, comprising the following steps:

• a circuit (20) clocked by means of at least one switch (LS, HS) is supplied with voltage (Vtrafo) and feeds a resonant circuit (21) having LLC topology,
• a transformer (T) following the resonant circuit (21) transmits electrical energy from a primary winding (L1) to a secondary winding (L2), wherein the resonant circuit (21) is coupled to the primary winding (L1) of the transformer (T), and the lighting means (2) are supplied with current starting from the secondary winding (L2),
**characterized in that** an actual current signal representing the current ($I_{prim}$) through the resonant circuit (21), as well as an actual voltage signal representing the magnetizing current ($I_{Lm}$) of the transformer (T), are supplied to a control unit (9),
the control unit (9) determines, on the basis of the actual current signal and the actual voltage signal, the secondary-side current ($I_{sec}$), and controls the clocked circuit (20) based thereon,

wherein the actual voltage signal, which represents the magnetizing current ($I_{Lm}$), is detected by means of a measuring inductance (L3) which is coupled to the primary winding (L1) of the transformer (T), wherein at least one of the at least one switch (LS, HS) of the clocked circuit (20) is clocked, depending on the determined secondary-side current ($I_{sec}$), in order to regulate the current through the lighting means (2), wherein the manipulated variable for the regulation is, for example, the frequency and/or the duty cycle, and wherein the control unit (9) performs the regulation only at dimming levels that are above a predetermined minimum value, preferably above 1% of the maximum brightness.

10. Method according to Claim 9, **characterized in that**
the determination of the secondary-side current ($I_{see}$) takes place via continuous measurement and processing of the voltage applied to the measuring inductance (L3).

11. Method according to Claim 10, **characterized in that**
the voltage applied to the measuring inductance (L3) is integrated and optionally multiplied in order to determine the magnetizing current ($I_{Lm}$) flowing on the primary side of the transformer (T).

12. Method according to Claim 11, **characterized in that**
the magnetizing current ($I_{Lm}$) is subtracted from the current ($I_{prim}$) flowing through the resonant circuit (21) in order to determine the secondary-side current ($I_{sec}$).

**Revendications**

1. Ensemble de circuits (1) pour faire fonctionner des moyens d'éclairage (2), en particulier une ou plusieurs DEL, présentant :

• un circuit (20) pouvant être alimenté avec une tension et cadencé au moyen d'au moins un commutateur (LS, HS), qui alimente un circuit résonant (21) avec une topologie LLC,
• un transmetteur (T) suivant le circuit résonant (21) pour la transmission d'énergie électrique d'un enroulement primaire (L1) à un enroulement secondaire (L2), dans lequel le circuit résonant (21) est couplé avec l'enroulement primaire (L1) et les moyens d'éclairage (2) peuvent être alimentés en courant à partir de l'enroulement secondaire (L2),
• une unité de commande (9), **caractérisé en ce qu'un** signal de courant réel représentant un courant ($I_{prim}$) aux bornes du circuit résonant (21) ainsi qu'un signal de tension réelle représentant le courant de magnétisation ($I_{Lm}$) du transmetteur (T) sont fournis à l'unité de commande (9),

l'unité de commande (9) étant conçue pour :

• sur la base du signal de courant réel ainsi que du signal de tension réelle, déterminer le courant côté secondaire ($I_{see}$) et, sur cette base, commander le circuit (21) cadencé ;
• pour la régulation du courant aux bornes des moyens d'éclairage (2), cadencer au moins un de l'au moins un commutateur (LS, HS) du circuit (20) cadencé en fonction du courant côté secondaire ($I_{see}$) déterminé, dans lequel la variable de réglage pour la régulation est par ex. la fréquence et/ou le rapport cyclique ; et
• réaliser la régulation uniquement avec des niveaux de gradation qui sont supérieurs à une valeur moyenne prédéfinie, de préférence supérieurs de 1 % de la luminosité maximale ;

dans lequel pour détecter le signal de tension réelle, qui représente le courant de magnétisation ($I_{Lm}$), une inductance de mesure (L3) est prévue, qui est couplée avec l'enroulement primaire (L1) du transmetteur (T).

2. Ensemble de circuits selon la revendication 1, **caractérisé en ce que** pour la détermination du courant côté secondaire ($I_{sec}$), des moyens sont formés pour la mesure et le traitement continus de la tension aux bornes de l'inductance de mesure (L3).

3. Ensemble de circuits selon la revendication 2, **cractérisé en ce que** ces moyens, qui présentent en particulier un intégrateur (30) et le cas échéant un multiplicateur (35), sont conçus pour déterminer le courant de magnétisation ($I_{Lm}$) circulant sur le côté primaire du transmetteur (T) à partir de la tension présente aux bornes de l'inductance de mesure (L3).

4. Ensemble de circuits selon la revendication 3, **caractérisé en ce que** l'ensemble de circuits (1) présente en outre un soustracteur (40) pour déterminer le courant côté secondaire ($I_{see}$) par soustraction du courant de magnétisation ($I_{Lm}$) du courant ($I_{prim}$) circulant à travers le circuit résonant (21).

5. Ensemble de circuits selon la revendication 4, **caractérisé en ce que** l'ensemble de circuits (1) comporte, pour la détection du signal de courant réel représentant le courant ($I_{prim}$) aux bornes du circuit résonant (21), une résistance de mesure ($R_{sns}$), qui est agencée en série par rapport à l'enroulement primaire (L1) du transmetteur (T).

6. Ensemble de circuits selon l'une quelconque des revendications précédentes, **caractérisé en ce que** le circuit (20) cadencé peut être alimenté par une tension continue.

7. Ensemble de circuits selon l'une quelconque des revendications précédentes, **caractérisé en ce que** le circuit (20) cadencé est un onduleur et est par exemple conçu sous la forme d'un circuit en demi-pont.

8. Appareil de fonctionnement pour faire fonctionner des moyens d'éclairage, présentant un ensemble de circuits selon l'une quelconque des revendications précédentes.

9. Procédé pour faire fonctionner des moyens d'éclairage (2), en particulier des DEL, comprenant les étapes suivantes :

• un circuit (20) cadencé au moins d'au moins un commutateur (LS, HS) est alimenté en tension ($V_{trafo}$) et alimente un circuit résonant (21) avec une topologie LLC,
• un transmetteur (T) suivant le circuit résonant (21) transmet de l'énergie électrique d'un enroulement primaire (L1) à un enroulement secondaire (L2), dans lequel le circuit résonant (21) est couplé avec l'enroulement primaire (L1) du transmetteur (T) et les moyens d'éclairage (2) peuvent être alimentés en courant à partir de l'enroulement secondaire (L2),
**caractérisé en ce qu'un** signal de courant réel représentant le courant ($I_{prim}$) aux bornes du circuit résonant (21) ainsi qu'un signal de tension réelle représentant le courant de magnétisation ($I_{Lm}$) du transmetteur (T) sont fournis à une unité de commande (9),
sur la base du signal de courant réel ainsi que du signal de tension réelle, l'unité de commande (9) détermine le courant côté secondaire ($I_{see}$)

et, sur cette base, commande le circuit (20) cadencé,

dans lequel le signal de tension réelle, qui représente le courant de magnétisation ($I_{Lm}$), est détecté à l'aide d'une inductance de mesure (L3), qui est couplée avec l'enroulement primaire (L1) du transmetteur (T),

dans lequel pour la régulation du courant aux bornes des moyens d'éclairage (2), au moins un de l'au moins un commutateur (LS, HS) du circuit (20) cadencé est cadencé en fonction du courant côté secondaire ($I_{see}$) déterminé, dans lequel la variable de réglage pour la régulation est par ex. la fréquence et/ou le rapport cyclique, et

dans lequel l'unité de commande (9) réalise la régulation uniquement avec des niveaux de gradation qui sont supérieurs à une valeur moyenne prédéfinie, de préférence supérieurs de 1 % de la luminosité maximale.

10. Procédé selon la revendication 9,
**caractérisé en ce que** la détermination du courant côté secondaire ($I_{see}$) est effectuée par une mesure et un traitement continus de la tension aux bornes de l'inductance de mesure (L3).

11. Procédé selon la revendication 10,
**caractérisé en ce que** pour déterminer le courant de magnétisation ($I_{Lm}$) circulant aux bornes du côté primaire du transmetteur (T), la tension aux bornes de l'inductance de mesure (L3) est intégrée et le cas échéant multipliée.

12. Procédé selon la revendication 11,
**caractérisé en ce que** pour déterminer le courant côté secondaire ($I_{sec}$), le courant de magnétisation ($I_{Lm}$) est soustrait du courant ($I_{prim}$) circulant à travers le circuit résonant (21).

EP 3 552 458 B1

Fig. 1

Fig. 2

12

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015103659 A2
- US 2010085782 A1
- US 20110133722 A1